# EUROPÄISCHE PATENTANMELDUNG

(11) **EP 4 516 600 A1**
(43) Veröffentlichungstag der Anmeldung: **05.03.2025**
(21) Anmeldenummer: 24190201.4
(22) Anmeldetag: 23.07.2024
(51) Int. Cl.: B60S 1/04, B60S 1/56, A01D 67/02

(54) **KABINE FÜR EINE LANDWIRTSCHAFTLICHE ARBEITSMASCHINE**

(30) Priorität: 04.09.2023 DE 102023123726
(71) Anmelder: CLAAS Tractor S.A.S., 78141 Vélizy-Villacoublay Cedex (FR)
(72) Erfinder: Benakopoulos, Stavros, 92120 MONTROUGE (FR); Robigo, Eric, 78800 Houilles-France (FR)
(74) Vertreter: CLAAS 365FarmNet GmbH

(57) **Zusammenfassung**

Die vorliegende Erfindung betrifft eine Kabine (3) für eine landwirtschaftliche Arbeitsmaschine (1), insbesondere einen Traktor (2). Die Kabine (3) umfasst einen Rahmen (5), welcher von einem Kabinenboden (6), einem Kabinendach (7) und diese miteinander verbindenden Kabinenstreben (8), zwischen denen Scheiben (9, 10, 13) angeordnet sind, ausgebildet ist. Die Kabine (3) umfasst zumindest eine Wischeranlage (14) zur Reinigung einer der Scheiben (9, 10, 13). Die Wischeranlage (14) umfasst einen Wischermotor (17) sowie einen vom Wischermotor (17) antreibbaren Wischerarm (15) mit einem Wischerblatt (16), der während eines Reinigungsvorgangs der Scheibe (9, 10, 13) reversibel zwischen zwei Endstellungen verschwenkbar ist. Die Kabine (3) ist dadurch gekennzeichnet, dass die Wischeranlage (14) von der Scheibe (9, 10, 13) entkoppelt außenseitig an der Kabine (3) angeordnet ist.

## Beschreibung

Die vorliegende Erfindung betrifft eine Kabine für eine landwirtschaftliche Arbeitsmaschine, insbesondere einen Traktor, gemäß dem Oberbegriff des unabhängigen Patentanspruchs 1 sowie eine landwirtschaftliche Arbeitsmaschine, insbesondere einen Traktor, mit einer Kabine gemäß dem Oberbegriff des unabhängigen Patentanspruchs 13.

Kabinen von landwirtschaftlichen Arbeitsmaschinen umfassen Wischeranlagen, die dazu dienen die Scheiben der Kabine, also eine Heck-, Seiten- oder Frontscheibe, bei Regen und/oder bei Verunreinigungen auf der Scheibe zu reinigen. Hierzu weisen die Wischeranlagen herkömmlicherweise einen Wischerarm mit einem Wischerblatt sowie eine oder mehrere Spritzdüsen zur Applikation von Waschflüssigkeit auf. Die Anordnung der Wischeranlage für eine zuverlässige Reinigung der Scheibe ist dabei regelmäßig eine Herausforderung, da die Scheiben einer Kabine einer landwirtschaftlichen Arbeitsmaschine eine große Erstreckung in Fahrzeuglängs- und Fahrzeugquerrichtung aufweisen. Ferner ist der für den Betrieb der landwirtschaftlichen Arbeitsmaschine erforderliche Sichtbereich der Scheiben erheblich größer als er dies beispielsweise bei herkömmlichen Kraftfahrzeugen ist. Der Sichtbereich deckt oftmals nahezu die gesamte Scheibe ab. Dies liegt darin begründet, dass mittels einer landwirtschaftlichen Arbeitsmaschine, insbesondere, wenn sie in Gestalt eines Traktors ausgeführt ist, verschiedenste Arbeiten durchgeführt werden können, wobei Anbaugeräte an unterschiedlichen Stellen mit der landwirtschaftlichen Arbeitsmaschine gekoppelt sein können. Eine umfängliche und ungestörte Sicht durch alle Scheiben der Kabine ist demnach wesentlich für einen sicheren und erfolgsversprechenden Betrieb der landwirtschaftlichen Arbeitsmaschine.

Aus der JP 2000 - 203258 A ist in diesem Zusammenhang beispielsweise eine Wischeranlage zur Reinigung einer Heckscheibe einer Kabine einer landwirtschaftlichen Arbeitsmaschine bekannt, welche an einem Handlauf, der im Inneren der Kabine an der Heckscheibe befestigt ist, montiert ist. Die von dem Wischermotor angetriebene Welle, an welcher der Wischerarm der Wischeranlage endseitig befestigt ist, ragt dabei durch eine in der Heckscheibe ausgebildet Öffnung durch die Scheibe hindurch, sodass der Wischerarm außenseitig auf einer Oberfläche der Heckscheibe zur Reinigung derselben aufliegt.

Die Anordnung der Wischeranlage über den im Inneren der Kabine ausgebildeten Handgriff erlaubt zwar die Anordnung des Wischermotors innenseitig in einem randnahen Bereich der Scheibe. Die Scheibe wird allerdings dennoch benötigt, um Komponenten der Wischeranlage am bestimmungsgemäßen Ort befestigen zu können. Die Fertigung einer Scheibe mit Ausnehmungen zur Führung von Komponenten der Wischeranlage, wie es in der JP 2000 - 203258 A beschrieben ist, ist allerdings fertigungstechnisch komplex und daher kostenintensiv. Ferner wird bedingt durch die Führung einer Komponente der Wischeranlage durch die Scheibe hindurch dennoch der Sichtbereich für den Bediener reduziert, da der Wischermotor die Scheibe in einem freien, also nicht von einem Rahmenelement und/oder Verkleidungsteil überdeckten, Bereich überdeckt.

Ausgehend hiervon ist es demnach die Aufgabe der vorliegenden Erfindung die beschriebenen Nachteile des Standes der Technik auszuräumen und insbesondere eine Kabine für eine landwirtschaftliche Arbeitsmaschine mit einer Wischeranlage anzugeben, die einerseits eine zuverlässige Reinigung des Sichtbereichs der Scheibe in allen Betriebssituationen der landwirtschaftlichen Arbeitsmaschine ermöglicht, andererseits die Sicht des Bedieners durch die Scheibe und somit in Folge auch den Betrieb der landwirtschaftlichen Arbeitsmaschine nicht beeinträchtigt.

Diese Aufgabe wird erfindungsgemäß durch die Merkmale des unabhängigen Patentanspruchs 1 gelöst, wobei vorteilhafte Weiterbildungen der erfindungsgemäßen Kabine Gegenstand der entsprechenden abhängigen Patentansprüche 2 bis 12 sind.

Demnach betrifft die vorliegende Erfindung eine Kabine für eine landwirtschaftliche Arbeitsmaschine, insbesondere einen Traktor. Die Kabine umfasst einen Rahmen, welcher von einem Kabinenboden, einem Kabinendach und diese miteinander verbindenden Kabinenstreben, zwischen denen Scheiben angeordnet sind, ausgebildet ist. Die Kabine umfasst zumindest eine Wischeranlage zur Reinigung einer der Scheiben. Die Wischeranlage umfasst einen Wischermotor sowie einen vom Wischermotor antreibbaren Wischerarm mit einem Wischerblatt, der während eines Reinigungsvorgangs der Scheibe reversibel zwischen zwei Endstellungen verschwenkbar ist. Die Kabine ist dadurch gekennzeichnet, dass die Wischeranlage von der Scheibe entkoppelt außenseitig an der Kabine angeordnet ist.

Von der Scheibe entkoppelt bedeutet hierbei, dass die Wischeranlage nicht unmittelbar an der Scheibe oder an Komponenten, die ausschließlich an der Scheibe befestigt sind, befestigt wird und dass Komponenten der Wischeranlage nicht durch die Scheibe hindurchragen, beispielsweise mittels in der Scheibe ausgebildeten Öffnungen, wie es beispielsweise im angeführten Stand der Technik erfolgt.

Durch die von der Scheibe entkoppelte Anordnung der Wischeranlage außenseitig an der Kabine wird eine Positionierung der Wischeranlage möglich, welche die Sicht des Bedieners durch die Scheibe nicht beeinträchtigt, gleichzeitig aber eine zuverlässige Reinigung eines den Sichtbereich definierenden Bereichs der Scheibe erfolgt. Die Anordnung der Wischeranlage erfolgt derart, dass der Bereich der Scheibe, welcher den Sichtbereich definiert, nicht von der Wischeranlage überdeckt bzw. überlagert wird. Ausschließlich der Wischerarm mit dem daran angeordneten Wischerblatt kann zum Zwecke der Reinigung im Sichtbereich angeordnet sein, insbesondere dann, wenn eine Reinigung der Scheibe im Betrieb der landwirtschaftlichen Arbeitsmaschine erfolgt. Der Bediener, der sich während des Betriebs der landwirtschaftlichen Arbeitsmaschine im Inneren der Kabine aufhält, kann somit zur Überwachung und Sicherstellung eines ordnungsgemäßen Betriebs der landwirtschaftlichen Arbeitsmaschine und gegebenenfalls an die landwirtschaftliche Arbeitsmaschine adaptierter Anbaugeräte durch die Scheiben der Kabine schauen, ohne dass die Wischeranlage die Sicht des Bedieners beeinträchtigt.

Gemäß einer vorteilhaften Weiterbildung der Erfindung ist vorgesehen, dass die Wischeranlage außenseitig an der Kabine in einem von dem Rahmen ausgebildeten Bereich und/oder in einem von dem Rahmen und/oder einem Verkleidungselement überdeckten Bereich der Scheibe angeordnet ist.

Durch die Anordnung der Wischeranlage außenseitig an der Kabine in einen von dem Rahmen ausgebildeten Bereich und/oder in einem von dem Rahmen und/oder einem Verkleidungselement überdeckten Bereich der Scheibe wird auf besonders vorteilhafte Art und Weise sichergestellt, dass die Wischeranlage zwar in der Nähe des Sichtbereichs angeordnet ist, diesen somit zuverlässig reinigen kann, gleichzeitig dieser bzw. die Sicht des Bedieners durch die Scheibe allerdings nicht durch die Anordnung von Komponenten der Wischeranlage beeinträchtigt wird.

Gemäß einer vorteilhaften Weiterbildung der Erfindung ist vorgesehen, dass die Wischeranlage eine Wischeranlage zur Reinigung einer Seitenscheibe der Kabine ist.

Vorzugsweise ist vorgesehen, dass die Wischeranlage in einem oberen Eckbereich der Seitenscheibe angeordnet ist, welcher an eine Kabinenstrebe, die eine B-Säule der Kabine ausbildet, und an das Kabinendach angrenzt.

Im Bereich der Seitenscheiben entfaltet die erfindungsgemäße Lösung ihre Vorteile in erheblichem Maße, da der Bediener während des Betriebs der landwirtschaftlichen Arbeitsmaschine durch die Seitenscheibe in die an der Kabine außenseitig angeordneten Außenspiegel schaut. Insbesondere dann, wenn die Anordnung der Wischeranlage im oberen Eckbereich der Seitenscheibe erfolgt, kann sichergestellt werden, dass der für den Blick in die Außenspiegel benötigte Teilbereich des Sichtbereichs frei von etwaigen Komponenten der Wischeranlage ist, allerdings stets zuverlässig mittels des Wischerarms und dem daran angeordneten Wischerblatt gereinigt werden kann.

Gemäß einer vorteilhaften Weiterbildung der Erfindung ist vorgesehen, dass die Wischeranlage außenseitig der Kabine an dem Rahmen, einem Verkleidungselement, einem Scharnier einer die Scheibe umfassenden Zugangstür zur Kabine und/oder einem Handlauf der Kabine befestigt ist.

Da all diese Elemente der Kabine die Scheiben außenseitig im Wesentlichen umfänglich umgeben bzw. einfassen, kann durch eine Befestigung der Wischeranlage an einem oder mehreren dieser Elemente die von der Scheibe entkoppelte Anordnung der Wischeranlage außenseitig an der Kabine besonders unkompliziert und ohne hohen konstruktiven Aufwand erfolgen.

Vorzugsweise ist vorgesehen, dass der Handlauf an dem Rahmen der Kabine, insbesondere an einer eine A-Säule ausbildenden Kabinenstrebe und an einer eine B-Säule ausbildenden Kabinenstrebe, befestigt ist.

Alternativ hierzu ist vorgesehen, dass der Handlauf an der Scheibe und/oder an dem Scharnier der die Scheibe umfassenden Zugangstür zur Kabine befestigt ist.

Weiter vorzugsweise ist vorgesehen, dass der Handlauf in einem an das Kabinendach angrenzenden Bereich der Kabine angeordnet ist, wobei sich der Handlauf im Wesentlich parallel zum Kabinendach entlang der Fahrzeuglängsachse erstreckt.

Die Anordnung der Wischeranlage an einem Handlauf außenseitig an der Kabine sorgt einerseits dafür, dass die Wischeranlage flexibel entlang der Länge des Handlaufs positioniert werden kann, und andererseits dafür, dass die während des Betriebs des Scheibenwischers vom Wischermotor erzeugten Geräuschemissionen, anders als wenn, der Wischermotor im Inneren der Kabine oder unmittelbar außenseitig am Rahmen der Kabine angeordnet wäre, nur in reduzierter Menge ins Innere der Kabine eintreten können. Mit anderen Worten, der Wischermotor wird von dem Rahmen der Kabine schwingungsentkoppelt über den Handlauf angeordnet außenseitig an der Kabine angeordnet.

Gemäß einer vorteilhaften Weiterbildung der Erfindung ist vorgesehen, dass die Wischeranlage ein Halterungselement umfasst, wobei die Wischeranlage mittels des Halterungselements außenseitig an der Kabine befestigt ist.

Die Verwendung eines Halterungselements erlaubt eine besonders unkomplizierte Anbringung der Wischeranlage außenseitig an der Kabine. Mittels des Halterungselements kann die Positionierung der Wischeranlage außenseitig an der Kabine flexibel erfolgen, ohne jeweils die Wischeranlage konstruktiv hinsichtlich des Elements, an welchem die Wischeranlage außenseitig an der Kabine befestigt werden soll, umgestalten zu müssen. Vielmehr kann wahlweise entweder mit nur einem stets identisch ausgestalteten Halterungselement die Anbringung an sämtlichen Elementen außenseitig an der Kabine erfolgen oder aber nur das Halterungselements muss für die Anbringung an einem oder mehreren speziellen Element außenseitig an der Kabine angepasst werden. Eine solche Ausgestaltung schafft eine gewisse Standardisierung bei der Anbringung der Wischeranlage außenseitig an der Kabine und reduziert die Herstellungskosten der Wischeranlage.

Gemäß einer vorteilhaften Weiterbildung der Erfindung ist vorgesehen, dass die Wischeranlage ein Motorgehäuse umfasst, welches vorzugsweise von zwei Gehäusehälften ausgebildet ist, wobei der Wischermotor an dem Halterungselement gelagert ist, wobei das Motorgehäuse, vorzugsweise die beiden Gehäusehälften des Motorgehäuses, das Halterungselement umschließen.

Die Ausgestaltung des Motorgehäuses in der Gestalt, dass dieses das Halterungselement umschließt, wobei der Wischermotor an dem Halterungselements gelagert ist, sorgt für eine besonders unkomplizierte und schnelle Montage der Wischeranlage außenseitig an der Kabine. Lediglich das Halterungselements muss demnach außenseitig an einem oder mehreren Elementen, beispielsweise dem Handlauf, der Kabine befestigt werden. Der Wischermotor wird dann von dem Halterungselement, beispielsweise über die Welle des Wischermotors, gelagert. Das Motorgehäuse umschließt dann diese Anordnung, wobei der Wischerarm von außen mit der aus dem Motorgehäuse ragende Welle, die vom Wischermotor angetrieben wird, endseitig befestigt wird.

Gemäß einer vorteilhaften Weiterbildung der Erfindung ist vorgesehen, dass die Wischeranlage entlang der Fahrzeuglängsachse und/oder entlang der Fahrzeughochachse verschiebbar angeordnet ist.

Eine entlang der Fahrzeuglängsachse und/oder der Fahrzeughochachse verschiebbare Anordnung der Wischeranlage außenseitig an der Kabine erlaubt je nach geometrischer Ausgestaltung der Kabine eine flexible Positionierung der Wischeranlage außenseitig an der Kabine. Je nach geometrischer Ausgestaltung der Kabine kann somit eine ideale Position für die Wischeranlage außenseitig an der Kabine gefunden werden, welche sicherstellt, dass der Sichtbereich der Scheibe von dem mit einem Wischerblatt versehenen Wischerarm der Wischeranlage zuverlässig gereinigt wird, gleichzeitig die Sicht des Bedieners durch die Scheibe von der Wischeranlage allerdings nicht beeinträchtigt wird.

Gemäß einer vorteilhaften Weiterbildung der Erfindung ist vorgesehen, dass der Wischerarm endseitig an einer Welle des Wischermotors drehfest befestigt ist, wobei das den Wischerarm tragende Ende der Welle von der Scheibe weg weist oder zu der Scheibe hin weist.

Die Ausrichtung der den Wischerarm tragenden Welle der Wischeranlage wahlweise weg von der Scheibe oder hin zu der Scheibe schafft eine gewisse Flexibilität bei der Anordnung der Wischeranlage außenseitig an der Kabine, wobei die geometrische Ausgestaltung und die Ausstattung der Kabine berücksichtigt werden kann. Je nachdem welche Elemente außenseitig an der Kabine vorgesehen sind, wie deren Anordnung erfolgt und deren geometrische Ausgestaltung ist variiert der für die Anordnung der Wischeranlage zur Verfügung stehenden Bauraum. Die wahlweise Ausrichtung der Welle weg von der Scheibe oder hin zur Scheibe sorgt dafür, dass der außenseitig der Kabine zur Verfügung stehende Bauraum in jedem Fall für die Positionierung der Wischeranlage genutzt werden, ohne dass hierfür eine aufwändige Anpassung des Aufbaus der Wischeranlage vorgenommen werden muss.

Die erfindungsgemäße Aufgabe wird ferner durch eine landwirtschaftliche Arbeitsmaschine, insbesondere einen Traktor, mit einer Kabine gemäß dem unabhängigen Patentanspruch 13 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine in Gestalt eines Traktors;
- FIG. 2: eine schematische und exemplarische Seitendarstellung einer erfindungsgemäßen Kabine der landwirtschaftlichen Arbeitsmaschine aus FIG. 1; und
- FIG. 3: eine schematische und exemplarische Explosionsdarstellung einer Wischeranlage für die Kabine aus FIG. 2.

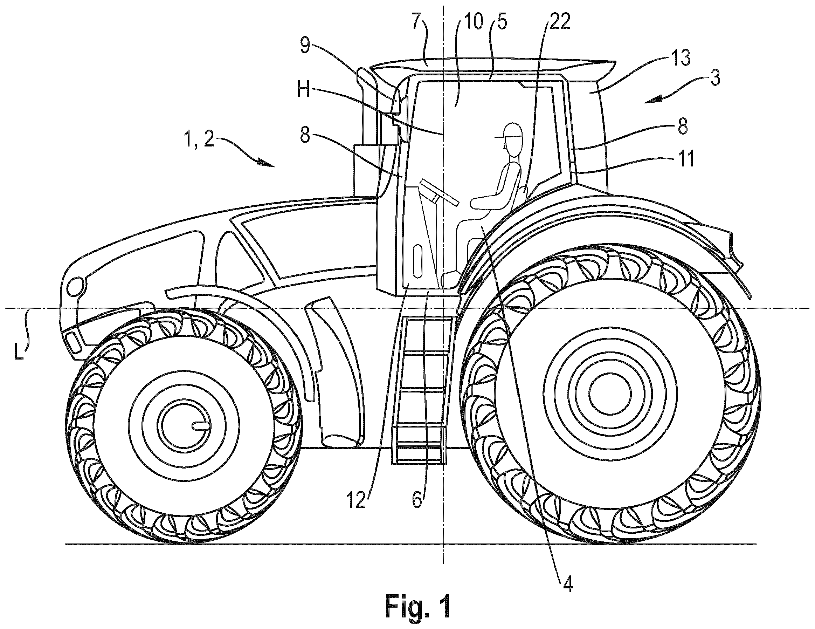

FIG. 1 zeigt eine schematische und exemplarische Darstellung einer erfindungsgemä-ßen landwirtschaftlichen Arbeitsmaschine 1 in Gestalt eines Traktors 2, dessen grundsätzlicher Aufbau bekannt ist. Die landwirtschaftliche Arbeitsmaschine 1 umfasst demnach eine Mehrzahl an - in den FIGs. nicht dargestellten - Arbeitsaggregaten, die dem Antrieb bzw. Betrieb der landwirtschaftlichen Arbeitsmaschine 1 und/oder dem Antrieb bzw. Betrieb eines - in den FIGs. nicht dargestellten - mit der landwirtschaftlichen Arbeitsmaschine 1 koppelbaren Anbaugerätes dienen.

Zur Steuerung sowie allgemeinen Überwachung des Betriebs der landwirtschaftlichen Arbeitsmaschine 1 umfasst die landwirtschaftliche Arbeitsmaschine 1 eine erfindungsgemäße Kabine 3, in der sich ein Bediener 4 während des Betriebs der landwirtschaftlichen Arbeitsmaschine 1 zur Steuerung derselben befindet. Die Kabine 3 umfasst einen Rahmen 5, der, wie in FIG. 1 dargestellt, einen Kabinenboden 6, ein Kabinendach 7 sowie den Kabinenboden 6 und das Kabinendach 7 miteinander verbindende Kabinenstreben 8 umfasst. Die Kabinenstreben 8 umfassen dabei die im Wesentlichen vertikal verlaufenden Kabinensäulen, auch A-Säulen und B-Säulen der Kabine 3 genannt, sowie etwaige sich zwischen den Kabinensäulen erstreckende Querstreben. Zwischen den die A-Säulen bildenden Kabinenstreben 8, dem Kabinenboden 6 und dem Kabinendach 7 erstreckt sich eine Frontscheibe 9, die einen vorderen räumlichen Abschluss der Kabine 3 bildet. Neben der Frontscheibe 9 umfasst die Kabine 3 an ihren Seiten jeweils Seitenscheiben 10, die einen seitlichen räumlichen Abschluss der Kabine 3 bilden. Die Seitenscheiben 10 erstrecken sich zwischen einer jeweiligen eine A-Säule bildenden Kabinenstrebe 8 und einer jeweiligen eine B-Säule bildenden Kabinenstrebe 8 sowie dem Kabinenboden 6 und dem Kabinendach 7. Die Seitenscheiben 10 können Bestandteil einer mittels eines Scharniers 11 schwenkbeweglich am Rahmen 5, vorzugsweise an einer eine B-Säule bildenden Kabinenstrebe 8, gelagerten Zugangstür 12 zur Kabine 3 sein. Weiterhin umfasst die Kabine 3 eine Heckscheibe 13, die einen hinteren räumlichen Abschluss der Kabine 3 bildet. Die Heckscheibe 13 erstreckt sich zwischen den die B-Säulen bildenden Kabinenstreben 8, dem Kabinendach 7 und einer hinteren eine Querstrebe ausbildenden Kabinenstrebe 8 und ist schwenkbar an dem Rahmen 5, beispielsweise am Kabinendach 7 oder den die B-Säulen bildenden Kabinenstreben 8, gelagert.

Der Rahmen 5 bzw. die den Rahmen 5 bildenden Rahmenelemente, Kabinenboden 6, Kabinendach 7 sowie Kabinenstreben 8, und/oder Scharniere 11 für Zugangstüren 12 können innenseitig und/oder außenseitig zumindest bereichsweise von - in den FIGs. nicht dargestellten - Verkleidungselementen umgeben bzw. verkleidet sein. Die Verkleidungselemente dienen dazu, dem Bediener 4 einen ansprechenden optischen Eindruck der Kabine 3 zu vermitteln. Gleichzeitig dienen die Verkleidungselemente dazu, Kabel, Leitungen oder dergleichen, die beispielsweise für die Realisierung der Lenkfunktion oder zur Übertragung von Daten zwischen verschiedenen elektronischen Geräten innerhalb und außerhalb der Kabine 3 erforderlich sind, zu führen, ohne dass diese von dem Bediener 4 wahrgenommen werden. Üblicherweise sind die Verkleidungselemente aus einem Kunststoff, vorzugsweise einen Polyurethan-Kunststoff, ausgebildet. Die Verkleidungselemente können allerdings auch aus anderen Materialien, beispielsweise einem Metall, wie Aluminium, Edelstahl oder dergleichen, und/oder einem Holz, ausgebildet sein. Genauso gut ist es vorstellbar, dass die Verkleidungselemente aus einem Materialmix ausgebildet sind, beispielsweise in der Gestalt, dass das Verkleidungselement überwiegend aus Kunststoff gefertigt ist, jedoch Applikationen bzw. Einlagen umfasst, die aus einem anderen Material, beispielsweise einem Metall und/oder Holz, ausgebildet sind. Die Verkleidungselemente, vorzugsweise solche Verkleidungselemente, die im Inneren der Kabine 3 angeordnet sind, oder Bereiche der Verkleidungselemente können ferner mit Überzügen, beispielsweise durch einen Stoff und/oder Leder ausgebildet, versehen sein, die für eine ansprechende optische und/oder haptische Wahrnehmung sorgen.

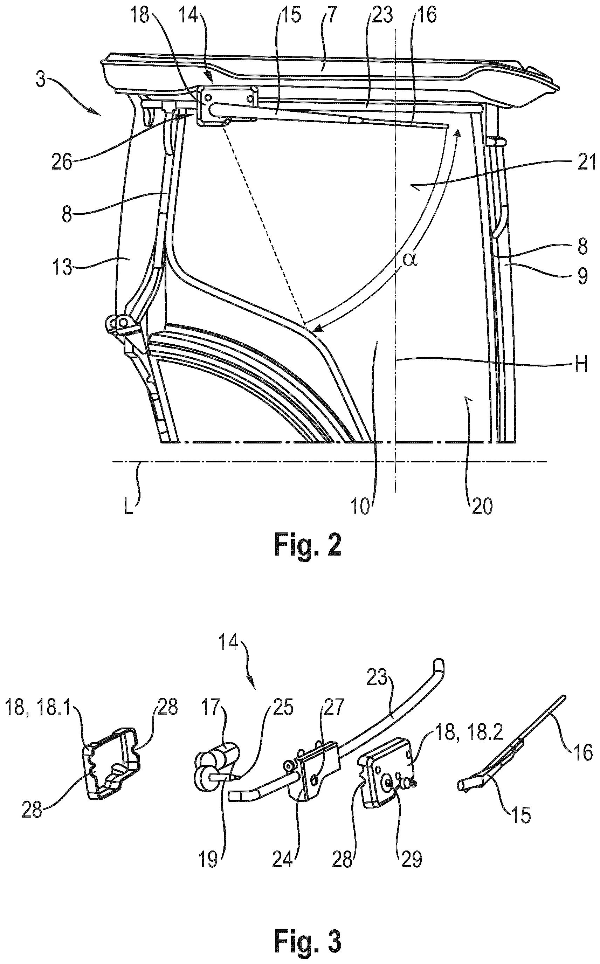

Die Kabine 3 umfasst weiterhin zumindest eine Wischeranlage 14 zur Reinigung einer der Scheiben 9, 10, 13 der Kabine 3. Die Wischeranlage 14 umfasst einen Wischerarm 15, an dem ein Wischerblatt 16 befestigt bzw. montiert ist. Der Wischerarm 15 ist an einem Wischermotor 17, der von einem Motorgehäuse 18 eingefasst sein kann, drehfest befestigt bzw. montiert. Die Anbindung des Wischerarms 15 and den Wischermotor 17 erfolgt dabei über eine Welle 19 des Wischermotors 17, wobei der Wischerarm 15 endseitig der Welle 19 an dieser befestigt wird. Über die vom Wischermotor 17 im Betrieb der Wischeranlage 14 angetriebenen Welle 19 wird der Wischerarm 15, der mit seinem Wischerblatt 16 auf einer außenseitigen Oberfläche 20 der Scheibe 9, 10, 13 aufliegt, verschwenkt. Der Wischerarm 15 wird bei bzw. während eines Reinigungsvorgangs mittels des Wischermotors 17 reversibel zwischen zwei Endstellungen verschwenkt, von denen eine beispielhaft in FIG. 2 dargestellt ist, wobei der Wischermotor 17 mittels einer - in den FIGs. nicht dargestellten - Steuereinrichtung der landwirtschaftlichen Arbeitsmaschine 1 entsprechend hierzu ansteuerbar ist. Die in FIG. 2 beispielhaft dargestellte Endstellung des Wischerarms 15 stellt dabei eine Ruhestellung des Wischerarms 15 dar, welche der Wischerarm 15 einnimmt, wenn die Wischeranlage 14 nicht in Betrieb ist. Der Wischerarm 15 läuft bei einem Antrieb der Welle 19 zwischen den beiden Endstellungen einen gewissen Winkelbereich α ab, wobei das Wischerblatt 16 auf der außenseitigen Oberfläche 20 der Scheibe 9, 10, 13 aufliegt und somit der bei einer Bewegung des Wischerarms 15 vom Wischerblatt 16 erfasste außenseitige Oberflächenbereich 21 der Scheibe 9, 10, 13 von Verunreinigungen befreit, also gereinigt, wird. Dieser Oberflächenbereich 21 stimmt größtenteils mit einem für den sicheren und ordnungsgemä-ßen Betrieb der landwirtschaftlichen Arbeitsmaschine 1 benötigten Sichtbereich der Scheibe 9, 10, 13, also einem für die Sicht des auf einem Fahrersitz 22 in der Kabine 3 sitzenden Bedieners 4 durch die Scheibe 9, 10, 13 benötigten Bereich der Scheibe 9, 10, 13, überein.

Wesentlich ist nunmehr, dass die Wischeranlage 14 von der Scheibe 9, 10, 13, also der Scheibe 9, 10, 13, die von der Wischeranlage 14 gereinigt wird, entkoppelt außenseitig an der Kabine 3 angeordnet ist. Von der Scheibe 9, 10, 13 entkoppelt bedeutet hierbei, dass die Wischeranlage 14 nicht unmittelbar an der Scheibe 9, 10, 13 oder an Komponenten, die ausschließlich an der Scheibe 9, 10, 13 befestigt sind, befestigt wird und dass Komponenten der Wischeranlage 14 nicht durch die Scheibe 9, 10, 13 hindurchragen, beispielsweise mittels in der Scheibe 9, 10, 13 ausgebildeten Öffnungen.

Die Wischeranlage 14 ist dabei insbesondere außenseitig an der Kabine 3 in einem von dem Rahmen 5 ausgebildeten Bereich und/oder in einem von dem Rahmen 5 und oder einem Verkleidungselement überdeckten Bereich der Scheibe 9, 10, 13 angeordnet. Von der Scheibe 9, 10, 13 entkoppelt schließt demnach nicht grundsätzlich aus, dass die Wischeranlage 14 außerhalb der Kabine 3 derart angeordnet sein kann, dass Bereiche der Scheibe 9, 10, 13 von der Wischanlage 14 überdeckt sind. Damit die Wischeranlage 14 von der Scheibe 9, 10, 13 entkoppelt außenseitig, insbesondere in einem von dem Rahmen 5 ausgebildeten Bereich und/oder in einem von dem Rahmen 5 und/oder einem Verkleidungselement überdeckten Bereich der Scheibe 9, 10, 13, an der Kabine 3 angeordnet werden kann, ist es vorgesehen, die Wischeranlage 14 außenseitig der Kabine 3 wahlweise an dem Rahmen 5, also einem oder mehreren der zuvor genannten Rahmenelemente, Kabinenboden 6, Kabinendach 7 sowie Kabinenstreben 8, einem Verkleidungselement, einem Scharnier 11 einer die Scheibe 9, 10, 13 umfassenden Zugangstür 12 zur Kabine 3 und/oder einem Handlauf 23 der Kabine 3 zu befestigen. Die Wischeranlage 14 kann ein Halterungselement 24 umfassen, mittels dem die Befestigung der Wischeranlage 14 außenseitig an der Kabine 3 erfolgt.

Die Wischeranlage 14 kann ferner verschiebbar außenseitig an der Kabine 3 angeordnet sein. Eine Verschiebbarkeit der Wischeranlage 14 kann dabei wahlweise entlang der Fahrzeuglängsachse L und/oder entlang der Fahrzeughochachse H realisiert sein. Hierdurch wird es möglich die Wischeranlage 14 flexibel hinsichtlich der vorliegenden Anforderungen und Randbedingungen außenseitig an der Kabine 3 zu positionieren. Wie eingangs beschrieben, ist der Wischerarm 15 endseitig an der Welle 19 des Wischermotors 17 drehfest befestigt. Das den Wischerarm 15 tragende Ende 25 der Welle 19 kann dabei wahlweise derart ausgerichtet sein, dass es von der Scheibe 9, 10, 13 weg weist oder zu der Scheibe 9, 10, 13 hin weist.

Nachfolgend wird eine Ausführungsform der erfindungsgemäßen Kabine 3 mit einer Wischeranlage 14 unter Bezugnahme auf die FIGs. 2 und 3 im Detail beschrieben.

Bei der in den FIGs. 2 und 3 dargestellten und insofern bevorzugten Ausführungsform ist die Wischeranlage 14 als eine Wischeranlage 14 zur Reinigung einer Seitenscheibe 10 der Kabine 3 ausgebildet. Die Wischeranlage 14 zur Reinigung der Seitenscheibe 10 der Kabine 3 ist dabei in einem oberen Eckbereich 26 der Seitenscheibe 10 angeordnet. Mit anderen Worten, die Wischeranlage 14 zur Reinigung der Seitenscheibe 10 der Kabine 3 ist den oberen Eckbereich 26 der Seitenscheibe 10 überdeckend außenseitig an der Kabine 3 angeordnet. Dieser Eckbereich 26 grenzt einerseits an eine Kabinenstrebe 8, die eine B-Säule der Kabine 3 ausbildet, und andererseits an das Kabinendach 7 an. Dieser von der Wischeranlage 14 überdeckte bzw. überlagerte Eckbereich 26 ist innenseitig der Kabine 3 von einem Rahmenelement und/oder Verkleidungselement abgedeckt, sodass die Wischeranlage 14 außenseitig der Kabine 3 in einem Bereich angeordnet ist, der nicht in den Sichtbereich der Seitenscheibe 10 fällt. Die Wischeranlage 14 kann dabei, wie in FIG. 2 dargestellt, nicht ausschließlich den Eckbereich 26 der Seitenscheibe 10 überdecken, sondern zusätzlich auch noch einen von dem Rahmen 5 bzw. einem Rahmenelement, hier dem Kabinendach 7, ausgebildeten Bereich überdecken.

Die Wischeranlage 14 ist bei der dargestellten Ausführungsform außenseitig der Kabine 3 an dem Handlauf 23 der Kabine 3 befestigt. In FIG. 2 ist der Handlauf 23 an dem Rahmen 5 bzw. Rahmenelementen der Kabine 3, hier an einer eine A-Säule ausbildenden Kabinenstrebe 8 und an einer eine B-Säule ausbildenden Kabinenstrebe 8, befestigt. Der Handlauf könnte alternativ allerdings auch an der Seitenscheibe 10 und/oder, sofern die Seitenscheibe 10 Bestandteil einer Zugangstür 12 zur Kabine 3 ist, an dem Scharnier 11 der Zugangstür 12 befestigt sein.

Der Handlauf 23 ist bei der dargestellten Ausführungsform in einem an das Kabinendach 7 angrenzenden Bereich der Kabine 3 angeordnet. Der Handlauf 23 erstreckt sich dabei im Wesentlichen parallel zum Kabinendach 7 entlang der Fahrzeuglängsachse L. Im Wesentlichen parallel bedeutet in diesem Zusammenhang, dass der Handlauf 23 der Ausrichtung des Kabinendaches 7 in Richtung der Fahrzeuglängsachse L folgt, wobei allerdings eine kleinere Neigung des Handlaufs 23 wahlweise in Richtung Front der Kabine 3 oder Heck der Kabine 3 möglich ist. Der Handlauf 23 könnte alternativ allerdings auch im Wesentlichen parallel zu einer Kabinenstrebe 8, beispielsweise eine A-Säule oder einer B-Säule, verlaufen, sodass sich der Handlauf 23 dann entlang der Fahrzeughochachse H erstreckt.

Bei der dargestellten Ausführungsform, insbesondere in FIG. 3 zu sehen, ist das Halterungselement 24 an dem Handlauf 23 außenseitig der Kabine 3 befestigt. Das Halterungselement 24 kann zur Befestigung an dem Handlauf 23 beispielsweise klemmend am Handlauf 23 montiert sein. Mittels einer derartigen Befestigung kann die Wischeranlage 14 entlang des Handlaufs 23 in Richtung der Fahrzeuglängsachse L verschiebbar sein. Der Wischermotor 17 ist dabei an dem Halterungselement 24 gelagert. Hierzu umfasst das Halterungselement 24 eine Ausnehmung 27, in welche der Wischermotor 17 zwecks Lagerung über die Welle 19 eingreift. Das Motorgehäuse 18 wird von zwei Gehäusehälften 18.1, 18.2 ausgebildet. Das Motorgehäuse 18, hier in Gestalt der beiden Gehäusehälften 18.1, 18.2, umschließt das Haltungselement 24 im befestigten Zustand der Wischeranlage 14 an dem Handlauf 23. Hierzu können die beiden Gehäusehälften 18.1, 18.2 wahlweise entweder miteinander oder jeweils mit dem Halterungselement 24 verbunden werden. Die Gehäusehälften 18.1, 18.2 umfassen dabei Ausnehmungen 28, die im befestigten Zustand der Wischeranlage 14 den Handlauf 23 aufnehmen. Der Wischerarm 15 wird auf dem aus dem Motorgehäuse 18, hier durch eine Öffnung 29 in der Gehäusehälfte 18.2, ragenden Ende 25 der Welle 19 befestigt.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Arbeitsmaschine | 25 | Ende der Welle |
| | | 26 | Eckbereich der Seitenscheibe |
| 2 | Traktor | | |
| 3 | Kabine | 27 | Ausnehmung in dem Halterungselement |
| 4 | Bediener | | |
| 5 | Rahmen | 28 | Ausnehmung in dem Motorgehäuse |
| 6 | Kabinenboden | 29 | Öffnung in einer Gehäusehälfte |
| 7 | Kabinendach | | |
| 8 | Kabinenstreben | | |
| 9 | Frontscheibe | α | Winkelbereich |
| 10 | Seitenscheibe | L | Fahrzeuglängsachse |
| 11 | Scharnier | H | Fahrzeughochachse |
| 12 | Zugangstür | | |
| 13 | Heckscheibe | | |
| 14 | Wischeranlage | | |
| 15 | Wischerarm | | |
| 16 | Wischerblatt | | |
| 17 | Wischermotor | | |
| 18 | Motorgehäuse | | |
| 18.1 | Gehäusehälfte | | |
| 18.2 | Gehäusehälfte | | |
| 19 | Welle | | |
| 20 | Außenseitige Oberfläche | | |
| 21 | Außenseitiger Oberflächenbereich | | |
| 22 | Fahrersitz | | |
| 23 | Handlauf | | |
| 24 | Halterungselement | | |

## Patentansprüche

1. Kabine (3) für eine landwirtschaftliche Arbeitsmaschine (1), insbesondere einen Traktor (2), wobei die Kabine (3) einen Rahmen (5) umfasst, welcher von einem Kabinenboden (6), einem Kabinendach (7) und diese miteinander verbindenden Kabinenstreben (8), zwischen denen Scheiben (9, 10, 13) angeordnet sind, ausgebildet ist, wobei die Kabine (3) zumindest eine Wischeranlage (14) zur Reinigung einer der Scheiben (9, 10, 13), umfasst, wobei die Wischeranlage (14) einen Wischermotor (17) sowie einen vom Wischermotor (17) antreibbaren Wischerarm (15) mit einem Wischerblatt (16) umfasst, der während eines Reinigungsvorgangs der Scheibe (9, 10, 13) reversibel zwischen zwei Endstellungen verschwenkbar ist, **dadurch gekennzeichnet, dass** die Wischeranlage (14) von der Scheibe (9, 10, 13) entkoppelt außenseitig an der Kabine (3) angeordnet ist.

2. Kabine (3) nach Anspruch 1, **dadurch gekennzeichnet, dass** die Wischeranlage (14) außenseitig an der Kabine (3) in einem von dem Rahmen (5) ausgebildeten Bereich und/oder in einem von dem Rahmen (5) und/oder einem Verkleidungselement überdeckten Bereich der Scheibe (9, 10, 13) angeordnet ist.

3. Kabine (3) nach Anspruch 1 oder 2, **dadurch gekennzeichnet, dass** die Wischeranlage (14) eine Wischeranlage (14) zur Reinigung einer Seitenscheibe (10) der Kabine (3) ist.

4. Kabine (3) nach Anspruch 3, **dadurch gekennzeichnet, dass** die Wischeranlage (14) in einem oberen Eckbereich (26) der Seitenscheibe (10) angeordnet ist, welcher an eine Kabinenstrebe (8), die eine B-Säule der Kabine (3) ausbildet, und an das Kabinendach (7) angrenzt.

5. Kabine (3) nach einem der Ansprüche 1 bis 4, **dadurch gekennzeichnet, dass** die Wischeranlage (14) außenseitig der Kabine (3) an dem Rahmen (5), einem Verkleidungselement, einem Scharnier (11) einer die Scheibe (9, 10, 13) umfassenden Zugangstür (12) zur Kabine (3) und/oder einem Handlauf (23) der Kabine (3) befestigt ist.

6. Kabine (3) nach Anspruch 5, **dadurch gekennzeichnet, dass** der Handlauf (23) an dem Rahmen (5) der Kabine (3), insbesondere an einer eine A-Säule ausbildenden Kabinenstrebe (8) und an einer eine B-Säule ausbildenden Kabinenstrebe (8), befestigt ist.

7. Kabine (3) nach Anspruch 5, **dadurch gekennzeichnet, dass** der Handlauf (23) an der Scheibe (9, 10, 13) und/oder an dem Scharnier (11) der die Scheibe (9, 10, 13) umfassenden Zugangstür (12) zur Kabine (3) befestigt ist.

8. Kabine (3) nach einem der Ansprüche 5 bis 7, **dadurch gekennzeichnet, dass** der Handlauf (23) in einem an das Kabinendach (7) angrenzenden Bereich der Kabine (3) angeordnet ist, wobei sich der Handlauf (23) im Wesentlich parallel zum Kabinendach (7) entlang der Fahrzeuglängsachse (L) erstreckt.

9. Kabine (3) nach einem der Ansprüche 5 bis 8, **dadurch gekennzeichnet, dass** die Wischeranlage (14) ein Halterungselement (24) umfasst, wobei die Wischeranlage (14) mittels des Halterungselements (24) außenseitig an der Kabine (3) befestigt ist.

10. Kabine (3) nach Anspruch 9, **dadurch gekennzeichnet, dass** die Wischeranlage (14) ein Motorgehäuse (18) umfasst, welches vorzugsweise von zwei Gehäusehälften (18.1, 18.2) ausgebildet ist, wobei der Wischermotor (17) an dem Halterungselement (24) gelagert ist, wobei das Motorgehäuse (18), vorzugsweise die beiden Gehäusehälften (18.1, 18.2) des Motorgehäuses (18), das Halterungselement (24) umschließen.

11. Kabine (3) nach einem der Ansprüche 1 bis 10, **dadurch gekennzeichnet, dass** die Wischeranlage (14) entlang der Fahrzeuglängsachse (L) und/oder entlang der Fahrzeughochachse (H) verschiebbar angeordnet ist.

12. Kabine (3) nach einem der Ansprüche 1 bis 11, **dadurch gekennzeichnet, dass** der Wischerarm (15) endseitig an einer Welle (19) des Wischermotors (17) drehfest befestigt ist, wobei das den Wischerarm (15) tragende Ende (25) der Welle (19) von der Scheibe (9, 10, 13) weg weist oder zu der Scheibe (9, 10, 13) hin weist.

13. Landwirtschaftliche Arbeitsmaschine (1), insbesondere Traktor (2), mit einer Kabine (3), **dadurch gekennzeichnet, dass** die Kabine (3) nach einem der Ansprüche 1 bis 12 ausgebildet ist.
